(19) Europäisches Patentamt
European Patent Office
Office européen des brevets

(11) Publication number: 0 226 956 A1

(12) EUROPEAN PATENT APPLICATION

(21) Application number: 86117229.4

(22) Date of filing: 10.12.86

(51) Int. Cl.⁴: C 09 D 3/49
B 05 D 7/26, C 08 G 61/08
C 08 J 5/18

(30) Priority: 16.12.85 US 809595

(43) Date of publication of application:
01.07.87 Bulletin 87/27

(84) Designated Contracting States:
AT BE CH DE ES FR GB GR IT LI LU NL SE

(71) Applicant: The B.F. GOODRICH Company
Dept. 0015 WHB-6 500 South Main Street
Akron, Ohio 44318(US)

(72) Inventor: Kurtz, Donald Morgan
680 Schiller Avenue
Akron Ohio 44310(US)

(74) Representative: von Kreisler, Alek, Dipl.-Chem. et al,
Deichmannhaus am Hauptbahnhof
D-5000 Köln 1(DE)

(54) **Polycycloolefins as coatings, films and sheets.**

(57) This invention is directed to a process for preparing a coating, an unsupported film or a sheet of a polymer of at least one cycloolefin monomer containing a norbornene group in crosslinked or uncrosslinked state wherein in the crosslinked state, the polymer contains an effective amount of a crosslinker selected from photoinitiators polyfunctional monomers, organic peroxides, azo compounds, and mixtures thereof. In crosslinked state, the polymer is insoluble and preferably non-tacky when immersed for two minutes in 1,1,1-trichloroethane and is dimensionally stable when subjected to temperatures above its softening point. Such products, in crosslinked or uncrosslinked state, are especially useful in electrical, electronic, microwave and electro-optical applications.

EP 0 226 956 A1

# POLYCYCLOOLEFINS AS COATINGS, FILMS AND SHEETS

## Background Of The Invention

Polymerization of cycloolefins containing a norbornene group can be accomplished by ring-opening polymerization in the presence of a metathesis catalyst system composed of a catalyst and a cocatalyst. The catalyst can be selected from tungsten or molybdenum compounds whereas the cocatalyst can be selected from alkylaluminum compounds. Such polymerization can be carried out by mixing at least one cycloolefin, with or without other copolymerizable monomers, with a hydrocarbon solvent in a reactor, adding thereto a molecular weight modifier followed by the cocatalyst and then the catalyst. Such a solution polymerization reaction is conducted at 25 to 100°C with agitation, and is mildly exothermic. Polymerization is completed in less than about two hours with the recovery of a smooth, viscous cement of honey-like consistency that comprises a polycycloolefin dissolved in the solvent.

After the honey-like polymer cement is prepared, the polymer is normally separated from the carrier solvent. In the past, steam stripping was used exclusively in plant operations to extract the polymer from the carrier solvent. More recently, extraction of the polymer solids has been accomplished in a different manner. Pursuant to this approach, the cement is mixed in a high shear mixer with a nonsolvent wherein the polymer precipitates out. A nonsolvent is a liquid that is miscible with the nonpolar solvent used in the polymerization reaction which is a solvent for the polymer. Examples of suitable nonsolvents include ethanol, n-propanol, isopropanol, and the like.

Other approaches are known for extracting

polymer solids from nonsolvent media. U.S. patents 4,400,501; 4,410,691; 4,410,692 and 4,414,386 describe such other approaches for precipitating or coagulating a polycycloolefin. After extraction the polymer is dried and is stored in a particulate form.

## Summary of the Invention

This invention is directed to thermoplastic and thermosetting polycycloolefin coatings, films and sheets and to preparation of such coatings, films and sheets. Thermosetting materials are obtained by crosslinking or curing the thermoplastic material by incorporating therein suitable agents and then carrying out the crosslinking of the thermoplastic polymer by means such as heat, ultraviolet light, or another form of energy.

## Detailed Description of the Invention

This invention is directed to polycycloolefin coatings, films and sheets which can be either thermoplastic or thermosetting, and to the preparation thereof. The thermosetting materials of this invention are obtained by crosslinking the thermoplastic resin or material to the extent where the material does not dissolve in a solvent, and is dimensionally stable when subjected to temperatures above the normal softening point, as determined by standard test procedures.

Another embodiment of this invention pertains to uncrosslinked polycycloolefins containing photoinitiating crosslinking agents which remain stable in the presence of ambient light conditions. Normally, photoinitiators require handling under special lighting conditions to avoid initiation of uncontrolled reaction. It was discovered that photoinitiators used in the systems described herein remain stable under ordinary

lighting conditions. This permits storage of products containing such photoinitiators for extended periods in uncured or uncrosslinked condition.

In preparing coatings, films and sheets, one can start with either the polymer cement which comes directly from a polymerization operation or else with a dry polycycloolefin. The polymer cement is of a honey-like consistency and contains about 15% polymer solids, as described above. If desired, the polymer cement can be extracted to remove impurities by preconcentration in a known fashion by mixing the polymer cement with a nonsolvent, such as an alcohol, whereby the alcohol extracts a portion of the solvent and forms an upper phase. The preconcentrated cement can be in the lower phase is removed. The preconcentrated cement contains about 20 to 35% polymer solids. Amount of alcohol used should be sufficient to preconcentrate but insufficient to precipitate the polymer. The preconcentrated cement rediluted with fresh solvent and can be used to prepare coatings, film, and sheets in any known manner or precipitated for recovery of dry polymer.

When starting with a dry, particulate polycycloolefin, the polymer is dissolved in a suitable solvent to the desired solids concentration before it is made into a coating formulation, film, or sheet. Suitable solvents include toluene, xylene, benzene, tetrahydrofuran, trichloroethane, cyclohexane, and the like, and mixtures thereof. Any solvent in which the uncrosslinked polycycloolefin is soluble, is generally regarded as a suitable solvent. By dissolving one weight part of a dried polycycloolefin in nine weight parts of a solvent, for instance, a useful cement of 10% solids

concentration is obtained. If it is desired to make a thermoplastic coating formulation, film or sheet, polymer cement can be used as such in absence of any crosslinking and/or initiating agents. The coating, film or sheet materials thus made are thermoplastic and do not have the attributes of crosslinked or thermosetting materials. In some instances, thermoplastic materials find specific applications where tackiness or solubility in a solvent is a prerequisite or is desired.

In applications where resistance to solvents or heat is sought, crosslinking agents and/or initiators are admixed with the thermoplastic polymer which is dissolved in a solvent, i.e., a polymer cement, and after being cast and dried in film form the polymer is then crosslinked by means of heat or another form of energy to obtain a thermosetting material. Such crosslinked or thermosetting materials are insoluble in solvents although they may be tacky after immersion in a solvent. They are also dimensionally stable at temperatures above the softening points of uncrosslinked materials.

The polymer cement, used as obtained from a polymerization operation or prepared by dissolving a dry polymer in a solvent, can be formulated with other additives before it is formed as a coating, a film, or a sheet. Examples of suitable additives include crosslinking agents and/or initiators, flow agents, pigments, fillers, flame retardants, antioxidants, and the like. The polymer cement can then be applied as a coating to a substrate by conventional methods such as spraying, roll coating, flow coating, dipping, and the like. In making film or sheet, the polymer cement can be flowed onto a substrate with or without the aid of a blade to

control thickness, or it can be extruded, roll cast or spin cast to form unsupported film or sheet. Thickness of a film or sheet can be controlled by dilution and by passing the polymer cement through an opening of predetermined dimensions at a fixed rate. If a thermoplastic material is desired, the polymer cement is dried to remove the solvent after casting. However, if a crosslinked or a thermosetting material is desired, the polymer cement is appropriately formulated with crosslinking agents prior to casting and drying. The film is then crosslinked or cured by means of heat or by means of another form of energy.

Crosslinking of a thermoplastic polymer involves the presence of a crosslinking agent in the polymer mixture and a crosslinking energy such as heat or radiation. Curing with radiation energy includes ionizing radiation of alpha, beta and gamma rays from a radioactive nuclei; x rays; high energy electrons; and nonionizing radiation as associated with ultraviolet, visible, infrared, microwave, and radio frequency wavelengths of energy. Preferred modes of crosslinking are by heat and with ultraviolet light.

Curing by means of ultraviolet light will depend on the thickness of the article to be cured and other variables. Generally, films and coatings can be cured with heat by subjecting the article to elevated temperatures of 80 to 200°C for 1 minute to 2 hours.

Ultraviolet light sources are based on mercury vapor arc. The mercury is enclosed in a quartz tube and a potential is applied to electrodes at either end of the tube. The electrodes can be mercury, iron, tungsten or other metals and the pressure in the lamp can be 1 to 10

atmospheres. Visible light sources can be obtained from high pressure mercury arcs by addition of rare gases or metal halides which increase emission lines in the 350-600 nm region of the spectrum. The light source normally used in commercial photocuring reactions is the medium pressure mercury arc lamp with a quartz or a Vicor envelope. Wavelengths of such uv sources are about 200-400 nm and 400-700 nm for visible light sources.

In radiation curing, particularly when using an ultraviolet light source, the polymer mix contains a suitable photoinitiator and a polyfunctional monomer. The presence of a photoinitiator in such systems is a prerequisite but the use of a polyfunctional monomer is optional. Best results, however, are realized when both a photoinitiator and a polyfunctional monomer are employed.

In thermal curing, the polymer mix should contain a free radical initiator and preferably also a polyfunctional monomer. The crosslinking is carried out in an atmosphere essentially free of oxygen and at an elevated temperature. The use of either a free radical initiator or a polyfunctional monomer alone can provide some crosslinking whereby the material is not soluble in the solvent although it can be tacky or non-tacky. When a free radical initiator is used together with a polyfunctional monomer, however, a crosslinked material is normally obtained which is insoluble in the solvent and which is not tacky or sticky.

In contrast to high energy radiation processes where the energy of radiation alone is sufficient to initiate reactions, initiation by ultraviolet irradiation almost always requires the presence of a photoinitiator, i.e., a chemical

compound that generates free radicals when subjected to ultraviolet radiation. In some of these cases, a hydrogen donor is also present wherein the hydrogen atom is positioned alpha to oxygen or nitrogen. Examples of such hydrogen donors include alcohols, ethers, tertiary amines, thiols, and the like. Examples of photoinitiators referred to above include 4-chloro and 4-fluorobenzophenone, 9-fluorenone, p-nitrobenzophenone, p-nitroacetophenone, benzophenone and its derivatives, xanthone and its derivatives, benzil and its derivatives; anthraquinone and its derivatives. Specific examples of the photoinitiators include xanthone, thioxanthone, 2-chlorothioxanthone; 4,4'-bis(N,N'-dimethylamino)-benzophenone, benzil, 9,10-phenanthraquinone, 9,10-anthraquinone, benzoin ethers, alpha, alpha-dimethoxy-alpha-phenylacetophenone, alpha, alpha-diethoxyacetophenone, and 1-phenyl-1,2,propanedione, 2-O-benzoyl oxime. Preferred photoinitiators include benzophenone, 4-chlorobenzophenone, 4-fluorobenzophenone, 9-fluorenone, p-nitrobenzophenone, p-nitroacetophenone, and 2,2-dimethyl-2-phenyl acetophenone (Irgacure 651).

The level of the photoinitiators is generally at 0.1 to 20, preferably 2 to 5 weight parts thereof per 100 weight parts of the cycloolefin monomer.

A polyfunctional monomer can be used alone, but preferably, it is used with a photoinitiator described above. A crosslinked polycycloolefin can be obtained by incorporating therein only a polyfunctional monomer. Such a crosslinked polycycloolefin can be insoluble in solvent and is

not tacky, however, it absorbs more solvent than when the polymer is crosslinked in the presence of both a photoinitiator and a polyfunctional monomer.

Suitable polyfunctional monomers are selected from unsaturated compounds, including difunctional unsaturated compounds which react with the cycloolefin polymer and thus provide crosslinking sites along the polymer chains. Such unsaturated polyfunctional monomers are generally selected from allyl phthalates, cyanurates, isocyanurates, phosphates, acrylates and methacrylates and divinylbenzene. A preferred group of such monomers is selected from alkylene glycol acrylates and methacrylates. Examples of suitable unsaturated polyfunctional monomers include allyl acrylate and methacrylate, and compounds such as diallyl phthalate, triallyl isocyanurate, triallyl cyanurate, triallyl phosphate, allyl methacrylate, ethylene glycol dimethacrylate, diethylene glycol diacrylate, and dimethacrylate, butylene glycol diacrylate and dimethacrylate, trimethylolpropane triacrylate and trimethacrylate, pentaerythrytol tetracrylate, divinyl benzene, tetrahydrofurfuryl methacrylate, trialkylene glycol dimethacrylate, ethylene dimethacrylate, tetraethylene glycol dimethacrylate, polyethylene glycol dimethacrylate, 1,6-hexanediol dimethacrylate, and the like. Preferred polyfunctional monomers include ethylene glycol dimethacrylate, diethylene glycol diacrylate, butylene glycol diacrylate and dimethacrylate, trimethylolpropane triacrylate and trimethacrylate, and divinyl benzene.

Amount of the polyfunctional monomer is generally at a level of 0.1 to 20, preferably 2 to 5 weight parts thereof per 100 weight parts of the cycloolefin monomer.

In thermal crosslinking of the polycycloolefin, a free radical initiator and/or a polyfunctional monomer can be incorporated in the polymer cement and the polymer is then crosslinked at elevated temperature. Amount of the polyfunctional monomer used can vary between 0.1 and 20 weight parts, preferably 2 to 5 weight parts thereof per 100 weight parts of the cycloolefin polymer. The same type of polyfunctional monomers can be used in thermal crosslinking as in radiation crosslinking. The polyfunctional monomers described above in connection with radiation curing, are also suitable for inclusion herein, alone or in combination with free radical initiators.

The free radical initiators are useful in thermal crosslinking alone or in conjunction with the polyfunctional monomers described above. Suitable free radical initiators are generally selected from organic peroxides and aliphatic azo compounds. The organic peroxides are further selected from the classes of diacetyl peroxides, acetyl alkylsulfonyl peroxides, dialkyl peroxydicarbonates, t-alkyl peroxyesters, O,O-t-alkyl O-alkyl monoperoxycarbonates, di(t-alkylperoxy) ketals, di-t-alkyl peroxides, t-alkyl hydroperoxides, ketone peroxides, and the like.

The azo compounds are selected from symmetrical and unsymmetrical azonitriles. The symmetrical azonitriles are solids with limited solubility whereas the unsymmetrical azonitriles, such as t-butylazonitriles, are liquids or low melting solids that are completely miscible in all common organic solvents. The azonitriles are ideally suited as thermal initiators for curing resins and have exceptional pot lives at ambient

storage temperatures.

Preferred organic peroxides include t-butyl perbenzoate, t-butyl peracetate, 2,5-di(benzoylperoxy)-2,5-dimethylhexane, di-t-butyl diperoxyazelate, 5-amyl peroctate, dibenzoyl peroxide, di(2,4-dichlorobenzoyl)peroxide, diacetyl peroxide, dilauroyl peroxide, diisobutyryl peroxide, ethyl 3,3-di(t-butylperoxy) butyrate, 2,2-di(t-butylperoxy)butane, 1,1-di(t-butylperoxy)cyclohexane, 1,1-di(t-butylperoxy)-3,3,5-trimethylcyclohexane, 2,5-di(t-butyl-peroxy)-2,5-dimethylhex-3-yne, di-t-butyl peroxide, dicumyl peroxide, di-n-propyl peroxydicarbonate, dicyclohexyl peroxydicarbonate, and the like. Specific examples of the azo initiators include 2,2'-azobis(2,4-dimethyl)pentane nitrile, 2-(t-butylazo)-4-methoxy-2,4-dimethylpentane nitrile, 2,2'-azobis(isobutyronitrile), and 1,1-azobis-cyclohexanecarbonitrile.

Amount of the free radical initiators can be in the range of 0.1 to 20, preferably 2 to 5 weight parts thereof per 100 weight parts cycloolefin polymer.

The polycycloolefins referred to herein are prepared in a well known manner by polymerizing one or more norbornene cycloolefin monomers which are characterized by the presence of the following moieties identified by the formulas I, II and III, that can be substituted or unsubstituted;

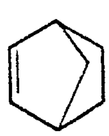

I

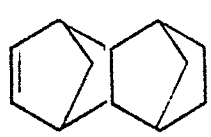

II

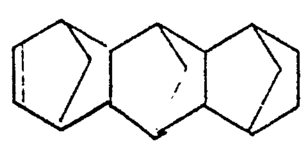

III

wherein formula I defines the norbornene monomers,

formula II defines tetracyclododecene monomers, and formula III defines hexacycloheptadecene monomers. Pursuant to this definition, suitable norbornene-type monomers include substituted and unsubstituted norbornenes, dicyclopentadienes, dihydrodicyclopentadienes, trimers of cyclopentadiene, tetracyclododecenes and hexacycloheptadecenes. Substituents on the norbornene-type monomers are selected from hydrogen, cyano, carboxy, carboxylates, alkyl and aryl groups of 1 to 20 carbon atoms, and saturated and unsaturated cyclic groups containing 3 to 12 carbon atoms which can be formed with one or more, preferably two, ring carbon atoms. In a preferred embodiment, the substituents are independently selected from hydrogen and alkyl groups of 1 to 2 carbon atoms. Generally speaking, the substituents on the norbornene-type monomers can be any which do not poison or deactivate the polymerization catalyst.

Examples of the preferred monomers referred to herein include dicyclopentadiene, methyltetracyclododecene, 2-norbornene, and other norbornene monomers such as 5-methyl-2-norbornene, 5,6-dimethyl-2-norbornene, 5-ethyl-2-norbornene, 5-butyl-2-norbornene, 5-hexyl-2-norbornene, 5-octyl-2-norbornene, and 5-dodecyl-2-norbornene. This invention especially contemplates preparation of homopolymers and copolymers of norbornene, methylnorbornene, tetracyclododecene, methyltetracyclododecene, dicyclopentadiene, and hexacycloheptadecene. Copolymers are defined as polymers of two or more monomers.

The norbornene cycloolefins described herein also include the following compounds:

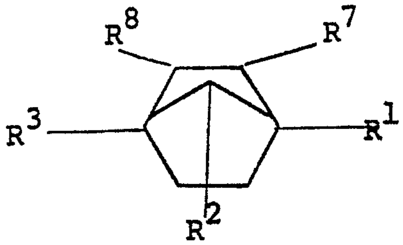

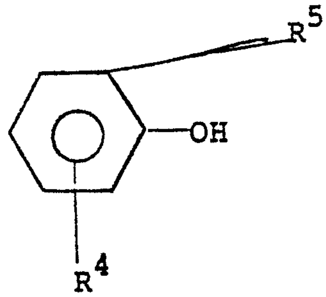

where $R^1$, $R^2$ and $R^3$ are independently selected from hydrogen and methyl groups; $R^4$ is selected from alkyl groups of 1-6 carbons located at the open ortho position; $R^5$ is selected from alkyl groups of 1-6 carbons, especially tertiary alkyl groups of 4-6 carbons; $R^7$ is selected from alkylene and alkenylene groups of 1-8 carbons, preferably 1-4 carbons; and $R^8$ is selected from hydrogen and alkyl groups of 1-4 carbons. Such monomers, and preparation thereof, are disclosed in the Layer U.S. patent 4,301,306, which is incorporated as if fully set forth herein.

The norbornene cycloolefins described herein also include the following compounds.

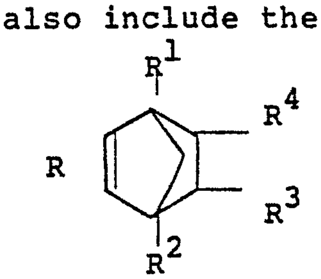

where R, $R^1$ and $R^2$ are hydrogens and $R^3$ and $R^4$ are individually selected from hydrogen and alkyl or alkenyl groups of 1-5 carbons. Such monomers, and preparation thereof, are disclosed in Layer U.S. patent 4,324,717, which is incorporated as if fully set forth herein.

The monomer or mixture of the norbornene containing cycloolefin monomers can contain up to 50% by weight thereof of at least one other

copolymerizable monomer. Such other copolymerizable monomers are preferably selected from mono- and dicycloolefins containing 4 to 12 carbon atoms, preferably 4 to 8 carbon atoms, examples of which include cyclobutene, cyclopentene, cyclopentadiene, cycloheptene, cyclooctene, 1,5-cyclooctadiene, cyclodecene, cyclododecene, cyclododecadiene, and cyclododecatriene. Also suitable as comonomers are bicyclic olefins containing 7 to 16 carbon atoms, preferably 8 to 12 carbon atoms.

For purposes herein, the polycycloolefins have dilute solution viscosities in toluene of about 0.1 to 10, preferably 0.3 to 3, and Tg of such polymers is in the range of about -40 to 400°C.

Polymerization of the cycloolefins containing a norbornene group by means of ring opening polymerization using a ring opening catalyst system, is well known in the art. Such technology is described in technical literature, including patents, and it does not appear to be necessary to give more information relating thereto.

Reference was earlier made to the solubility test used herein to determine the extent of crosslinking achieved in a sample of a polycycloolefin. The test involves the immersion of a polycycloolefin sample for two minutes in 1,1,1-trichloroethane. Upon removal of the sample from the chloroethane, the sample is wiped dry with a paper towel. The extent of crosslinking is determined by the weight gain. The test samples had a thickness of 2 mils and were 1 inch in diameter.

The uncrosslinked polycycloolefin samples dissolve in 1,1,1-trichloroethane within the test period of two minutes. This verifies that the chloroethane is a solvent for the uncrosslinked polycycloolefins. Crosslinked samples do not

dissolve in 1,1,1-trichloroethane but they can be either tacky or non-tacky. If a sample is tacky, it should be apparent that it cannot be wiped dry, therefore, weight gain was not determined on such samples. The samples which are not tacky, have a higher degree of crosslinking than the tacky samples. Certain samples which are not tacky, absorb and retain more 1,1,1-trichloroethane than others. Such samples also appear to have a lower degree to crosslinking than samples which are also not tacky but absorb less of the solvent.

A thermal test can also be used to evaluate effectiveness of crosslinking to improve thermal stability of polycycloolefins, as is required for solder temperature in electronic applications. The thermal test involves the immersion of a 1 inch (25 mm) by 2" (51 mm) film of 2 mil thickness (0.05mm) in a fluorinated hydrocarbon vapor at 250°C for 30 seconds. The fluorinated hydrocarbon is 3M's Fluorinert FC-71, which designates the boiling point. An uncrosslinked film will melt and shrink in this test whereas a corresponding crosslinked film will maintain its original dimensions and shape as an unsupported film.

The polycycloolefins described herein can generally be used as protective coatings, encapsulants, and films for electrical and electronic applications, coatings, and the like, where deposition of the coating is made in a known manner, as previously described. Such coatings are thin, pinhole-free, and depending on applications, can be developed to provide corrosion protection, abrasion and chemical resistance, improved adhesion, barrier properties, and the like.

In a preferred embodiment of this invention, polymer cement is deposited on a moving

support in a predetermined thickness, following which, the solvent is removed by drying. If the polymer cement contains a crosslinking agent, the polymer can be crosslinked by subjecting it to heat, ultraviolet radiation source, or other form of energy.

The polycycloolefins in the form of coatings, unsupported films and sheets have outstanding electrical properties such as dielectric constant of less than 2.8. Due to this character, they are particularly useful in electronic applications such as conformal coatings, dielectric films, and optical fiber coatings. The coatings and unsupported films generally have a thickness from about 0.0001 inch (0.0025 millimeters) to about 0.020 inch (0.5 millimeter). Sheets are considered to have thickness greater than that of unsupported films.

The polymer cements described herein can also be used to coat wire and cable and optical fibers in the usual manner. If the polymer cement contains a crosslinking agent, such a coating can be crosslinked with heat, ultraviolet radiation, or another form of energy. In such an application, the wire, optical fiber or cable forms the support surface on which the polymer cement is deposited.

Photocrosslinkable polycycloolefin films can be useful as dry film resists in the manufacture of electronic printed circuits.

For certain electronic applications such as conformal coatings and capacitor films, dielectric constant of a material is very important. For the applications such as disclosed herein, the dielectric constant of 3 or less is preferred. In the context of such a criterion, the polycycloolefin films described herein have dielectric constants

which are well below 3 over a broad frequency range.

The following examples demonstrate preparation of polycycloolefins in the form of coatings, films or sheets in uncrosslinked condition or crosslinked by means of heat or radiation energy.

In the examples that follow, the following contractions are used:

MTD - methyltetracyclododecene
MNB - methyl norbornene
DCPD - dicyclopentadiene
TMPTA - trimethylolpropane triacrylate

Example 1

This example demonstrates preparation of a 2-mil thick film by incorporating therein a photoinitiator or ultravioilet absorber but not the polyfunctional monomer and then crosslinking the film with a radiation source. A degree of crosslinking of the film sample was obtained.

In preparing the film sample, the following ingredients were mixed in amounts shown below:

1.0 gram 90/10 copolymer of MTD and MNB
9.0 grams toluene
0.05 gram 4-chlorobenzophenone photoinitiator

The norbornene cycloolefin copolymer was in a particulate form, as was the photoinitiator. The above ingredients were mixed, yielding a 10% solids solution of the copolymer containing 5 weight parts of the initiator per 100 weight parts of the copolymer.

Two grams of the above polymer solution was added to an aluminum dish 2-inches in diameter. The polymer solution in the dish was dried at room temperature for about three days to remove the toluene solvent, leaving a dry film sample of about 2 mils in thickness.

The film sample was exposed to a 1000-watt

medium pressure mercury lamp at a distance of six inches for two 30-second exposures, at an interval of 30 seconds to allow the sample to cool. The use of the two exposure periods was made to minimize heat build-up. If the samples were to be exposed for one period of 60 seconds, a hole would be burned through the sample.

The exposed film sample was immersed for two minutes in 1,1,1-trichloroethane and was then removed. The exposed film sample did not dissolve in 1,1,1-trichloroethane but it was tacky. An unexposed film sample dissolved in the chloroethane within the 2-minute test period. Weight gain by the exposed film sample was not determined because it was tacky.

Example 2

This example demonstrates preparation of a polycycloolefin film sample by incorporating therein a polyfunctional monomer but not the photoinitiator. A degree of crosslinking of the film sample was obtained.

In preparing the film sample, the following ingredients were mixed in amounts indicated below:

1.0 g 90/10 copolymer of MTD and MNB
9.0 g toluene
0.05 g TMPTA

The same procedure for making the film and its exposure was followed as above. After the exposure, the film was insoluble in 1,1,1-trichloroethane, was not tacky, and had a weight gain of 6%.

Example 3

This example demonstrates preparation of a polycycloolefin film sample by incorporating therein both a polyfunctional monomer and a photoinitiator or ultraviolet absorber. A crosslinked film was

obtained.

In preparing the film sample, the following ingredients were mixed in amounts indicated below:

1.0 g 90/20 copolymer of MTD and MNB
9.0 g toluene
0.05 g 4-chlorobenzophenone
0.05 g TMPTA

Following the same preparation and exposure procedure as above, the film sample was insoluble in 1,1,1-trichloroethane, was not tacky, and had a weight gain of less than 2%. This film also had a dielectric constant of about 2.2.

Example 4

This example demonstrates preparation of a polycycloolefin film sample in the same manner as in Example 3 but using a different amount of the photoinitiator and a different amount of the polyfunctional monomer. A crosslinked film was obtained.

The film sample was prepared using the following ingredients in amounts given below:

1.0 g 90/10 copolymer of MTD and MNB
9.0 g toluene
0.03 g TMPTA
0.02 g 4-chlorobenzophenone

Following the same preparation and exposure procedure described above, the film was insoluble in 1,1,1-trichloroethane, it was not tacky after immersion in 1,1,1-trichloroethane, and it had a weight gain of 3%, indicating absorption of the solvent by the film.

Example 5

This example demonstrates the use of a copolymer of MTD, MNB and DCPD in making a film. A crosslinked film was obtained.

The film sample was prepared using the

following ingredients in amounts given below:

1.0 g 85/10/5 copolymer of MTD, MNB and DCPD
9.0 g toluene
0.05 g TMPTA
0.05 g 4-chlorobenzophenone

Following the same preparation and exposure procedure described above, a crosslinked film was obtained which was insoluble in 1,1,1-trichloroethane and was not tacky.

Example 6

This example additionally demonstrates crosslinking of a hydrogenated MTD film.

The film sample was prepared using the following ingredients in amounts given below:

1.0 g hydrogenated MTD homopolymer
9.0 g toluene
0.02g TMPTA
0.02 g 4-chlorobenzophenone

Following the same preparation and exposure procedure described above, a crosslinked film was obtained which was insoluble in 1,1,1-trichloroethane, was not tacky, and showed no weight gain.

Example 7

This example demonstrates thermal curing of polycycloolefins using an organic peroxide initiator.

The film sample was prepared using the following ingredients in amounts given below:

1.0 g 90/10 copolymer of MTD and MNB
9.0 g Toluene
0.04 g TMPTA
0.04 g t-butyl perbenzoate

The dry film samples were heated to 150°C between cellophane film. First sample was heated for 10 minutes at 150°C. The first sample was not tacky and showed 3% weight gain. A second film

sample was heated at 150°C for 15 minutes. The second film sample was also not tacky and showed weight gain of less than 2%.

Example 8

A sample of unsupported film of Example 3 was subjected to the thermal test. After testing, the film sample retained its original shape whereas the same material in uncrosslinked condition melted and shrunk immediately when subjected to the same test.

Claims

1. Process for preparing a polycycloolefin product in the form of a coating, a film or a sheet comprising the steps of depositing a polymer solution in a thin layer on a support surface, said polymer solution being a solution of a polymer of at least one cycloolefin monomer containing a norbornene group in a solvent for said polymer; and drying said polymer solution to remove said solvent so that said polymer is disposed in a uniform, thin layer on said support surface.

2. Process of claim 1 wherein said step of depositing a polymer solution on said support surface is selected from spraying, casting, dipping, flow coating, curtain coating, and roll coating said polymer solution on said support surface.

3. Process of claim 1 including the step of controlling the thickness of said polymer solution layer.

4. Process of claim 3 wherein said step of controlling thickness of said polymer solution layer is accomplished by passing said polymer solution layer through an opening between said support surface and a rigid member disposed a predetermined distance above said support surface.

5. Process of claim 3 wherein said step of controlling thickness of said polymer solution layer is accomplished by continuously passing said polymer solution at a fixed concentration through an opening of predetermined dimensions at a fixed rate.

6. Process of claim 1 wherein said cycloolefin monomer is selected from monomers containing one of the following substituted and unsubstituted moieties defined by formulas I, II and III:

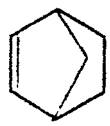 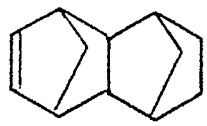 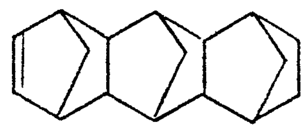

I II III

7. Process of claim 6 wherein said substituents on said cycloolefin monomer are independently selected from hydrogen, cyano, carboxyl, carboxylate, alkyl and aryl groups of 1-20 carbons, and saturated and unsaturated cyclic groups of 3-12 carbons which can be formed with one or more of the ring carbons.

8. Process of claim 3 wherein said polymer is a reaction product of a monomer charge selected from substituted and unsubstituted norbornene, tetracyclododecene, dicyclopentadiene, hexacycloheptadiene, and mixtures thereof.

9. Process of claim 3 wherein said polymer is a reaction product of a monomer charge selected from norbornene, methyl norbornene, tetracyclododecene, methyltetracyclododecene, dicyclopentadiene, hexacycloheptadiene, and mixtures thereof.

10. Process of claim 8 wherein said monomer charge contains up to about 50% by weight thereof of one or more other polymerizable comonomers.

11. Process of claim 1 wherein said polymer solution contains an effective amount for crosslinking said polymer of a crosslinking agent selected from photoinitiators, polyfunctional monomers, organic peroxides, aliphatic azo compounds, and mixtures thereof; said process also including the step of subjecting said polymer in dry form to an energy source for crosslinking same to the extent that a 2-mil, 1-inch diameter sample

thereof is insoluble in 1,1,1-trichloroethane after immersion therein for two minutes, said polymer in film form is dimensionally stable and has a dielectric constant of less than 3.

12. Process of claim 1 wherein said polymer solution contains an effective amount for crosslinking said polymer of a crosslinking agent selected from photoinitiators, polyfunctional monomers, organic peroxides, and mixtures thereof; said process also including the step of subjecting said polymer to an energy source for crosslinking same to the extent that a 2-mil, 1-inch diameter sample thereof is insoluble in 1,1,1-trichloroethane after immersion therein for two minutes and is dimensionally stable in a thermal test.

13. Process of claim 12 wherein said photoinitiators are selected from benzophenone, xanthone, benzil, anthraquinone, derivatives of such photoinitiators, and mixtures thereof; said polyfunctional monomers are selected from allyl phthalates, cyanurates, isocyanurates, phosphates, acrylates, methacrylates and from tetrahydrofurfuryl and alkylene glycol acrylates and methacrylates, and mixtures thereof; and said organic peroxides are selected from diacetyl peroxides, acetyl alkylsulfonyl peroxides, dialkyl peroxydicarbonates, t-alkyl peroxyesters, OO-t-alkyl O-alkyl monoperoxycarbonates, di(t-alkylperoxy)ketals, di-t-alkyl peroxides, t-alkyl hydroperoxides, ketone peroxides, and mixtures thereof.

14. Process of claim 13 wherein said energy source is selected from a thermal energy source and an ultraviolet light source, and amount of said crosslinking agent is 0.1 to 20 weight parts per 100 weight parts of said polymer.

15. Process of claim 13 wherein said

energy source is a thermal energy source, said crosslinking agent is selected from organic peroxides, polyfunctional monomers, and mixtures thereof, and amount of said crosslinking agent is 0.1 to 20 weight parts per 100 weight parts of said monomer.

16. Process of claim 13 wherein said energy source is an ultraviolet light source, said crosslinking agent is selected from photoinitiators, polyfunctional monomers, and mixtures thereof, and amount of said crosslinking agent is 0.1 to 20 weight parts per 100 weight parts of said polymer.

17. Process of claim 15 wherein said organic peroxides are selected from t-butyl perbenzoate, t-butyl hydroperoxide, di-t-butyl peroxide, 2,5-dimethyl-2,5-di(t-butyl peroxy) hexane, 2,5-dimethyl-2,5-di(t-butyl peroxy) hexene-3, and mixtures thereof; and said polyfunctional monomers are selected from trimethylol propane triacrylate and trimethacrylate, pentaerythritol tetracrylate, divinylbenzene, triallyl cyanurate, diethylene glycol diacrylate and dimethacrylate, and mixtures thereof.

18. Process of claim 16 wherein said photoinitiators are selected from benzophenone, 4-chloro and 4-fluoro benzophenones, 9-fluorenone, 4-nitrobenzophenone, and mixtures thereof; and said polyfunctional monomers are selected from trimethylol propane triacrylate and trimethacrylate, pentaerythritol tetracrylate, divinylbenzene, triallyl cyanurate, diethylene glycol diacrylate and dimethacrylate, and mixtures thereof.

19. Process of claim 17 wherein said crosslinking agent includes at least one of said organic peroxides and at least one of said polyfunctional monomers, and wherein said polymer in

dry form is crosslinked to the extent that a 2-mil sample thereof is insoluble and non-tacky when immersed for two minutes in 1,1,1-trichloroethane.

20. Process of claim 18 wherein said crosslinking agent includes at least one of said photoinitiators and at least one of said polyfunctional monomers, and wherein said polymer in dry form is crosslinked to the extent that a 2-mil sample thereof is insoluble and is non-tacky when immersed for two minutes in 1,1,1-trichloroethane.

21. A coating on a support surface comprising a polymer of at least one cycloolefin monomer containing a norbornene group.

22. Coating of claim 21 which is of a uniform thickness wherein said cycloolefin monomer is selected from monomers containing one of the following substituted and unsubstituted moieties defined by formulas I, II and III:

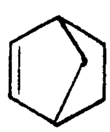

I

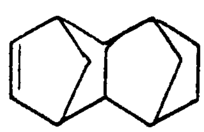

II

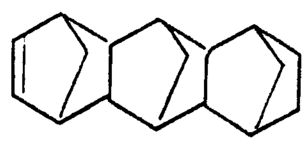

III

23. Coating of claim 22 wherein said substituents on said cycloolefin monomer are independently selected from hydrogen, cyano, carboxyl, carboxylate, alkyl and aryl groups of 1-20 carbons, and saturated and unsaturated cyclic groups of 3-12 carbons which can be formed with one or more of the ring carbons; and wherein said polymer is a reaction product of a monomer charge selected from substituted and unsubstituted norbornene, tetracyclododecene, dicyclopentadiene, hexacycloheptadiene, and mixtures thereof.

24. Coating of claim 21 wherein said polymer is a reaction product of a monomer charge

selected from norbornene, methyl norbornene, tetracyclododecene, methyltetracyclododecene, dicyclopentadiene, hexacycloheptadiene, and mixtures thereof and wherein said monomer charge contains up to about 50% by weight thereof of one or more other polymerizable comonomers.

25. Coating of claim 21 wherein said polymer contains an effective amount for crosslinking said polymer of a crosslinking agent selected from photoinitiators, polyfunctional monomers, organic peroxides, aliphatic azo compounds, and mixtures thereof.

26. Coating of claim 21 wherein said polymer contains 0.1 to 20 weight parts of a crosslinking agent per 100 weight parts of said monomer, said crosslinking agent is selected from photoinitiators, polyfunctional monomers, organic peroxides, and mixtures thereof; said photoinitiators are selected from benzophenone, xanthone, benzil, anthraquinone, derivatives of such photoinitiators, and mixtures thereof; said polyfunctional monomers are selected from allyl phthalates, cyanurates, isocyanurates, phosphates, acrylates, methacrylates and from tetrahydrofurfuryl and alkylene glycol acrylates and methacrylates, and mixtures thereof; and said organic peroxides are selected from diacetyl peroxides, acetyl alkylsulfonyl peroxides, dialkyl peroxydicarbonates, t-butyl peroxyesters, 00-t-alkyl o-alkyl monoperoxycarbonates, di(t-alkylperoxy) ketals, di-t-alkyl peroxides, t-alkyl hydroperoxides, ketone peroxides, and mixtures thereof.

27. Coating of claim 26 containing areas where said polymer is crosslinked to the extent of being insoluble when immersed in 1,1,1-trichloroethane for two minutes, and areas

where said polymer is not crosslinked.

28. An unsupported film or a sheet comprising a polymer of at least one cycloolefin monomer containing a norbornene group.

29. Film or sheet of claim 28 wherein said substituents on said cycloolefin monomer are independently selected from hydrogen, cyano, carboxyl, carboxylate, alkyl and aryl groups of 1-20 carbons, and saturated and unsaturated cyclic groups of 3-12 carbons which can be formed with one or more of the ring carbons; and wherein said polymer is a reaction product of a monomer charge selected from substituted and unsubstituted norbornene, tetracyclododecene, dicyclopentadiene, hexacycloheptadiene, and mixtures thereof.

30. Film or sheet of claim 28 said polymer is a reaction product of a monomer charge selected from norbornene, methyl norbornene, tetracyclododecene, methyltetracyclododecene, dicyclopentadiene, hexacycloheptadiene, and mixtures thereof and wherein said monomer charge contains up to about 50% by weight thereof of one or more other polymerizable comonomers.

31. Film or sheet of claim 28 wherein said polymer contains an effective amount for crosslinking said polymer of a crosslinking agent selected from photoinitiators, polyfunctional monomers, organic peroxides, aliphatic azo compounds, and mixtures thereof.

32. Film or sheet of claim 28 wherein said polymer contains 0.1 to 20 weight parts of a crosslinking agent per 100 weight parts of said polymer, said crosslinking agent is selected from photoinitiators, polyfunctional monomers, organic peroxides, and mixtures thereof; said photoinitiators are selected from benzophenone,

xanthone, benzil, anthraquinone, derivatives of such photoinitiators, and mixtures thereof; said polyfunctional monomers are selected from allyl phthalates, cyanurates, isocyanurates, phosphates, acrylates, methacrylates and from tetrahydrofurfuryl and alkylene glycol acrylates and methacrylates, and mixtures thereof; and said organic peroxides are selected from diacetyl peroxides, acetyl alkylsulfonyl peroxides, dialkyl peroxydicarbonates, t-butyl peroxyesters, OO-t-alkyl o-alkyl monoperoxycarbonates, di(t-alkylperoxy) ketals, di-t-alkyl peroxides, t-alkyl hydroperoxides, ketone peroxides, and mixtures thereof.

33. Film or sheet of claim 28 containing areas where said polymer is crosslinked to the extent of being insoluble when immersed in 1,1,1-trichloroethane for two minutes, and areas where said polymer is not crosslinked.

34. Composition of matter comprising a polymer of at least one cycloolefin monomer containing a norbornene group and an effective amount for crosslinking said polymer of a crosslinking agent selected from photoinitiators, polyfunctional monomers, organic peroxides, aliphatic azo compounds, and mixtures thereof.

35. Composition of claim 34 wherein said cycloolefin monomer is selected from monomers containing one of the following moieties defined by formulas I, II and III:

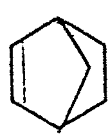

I

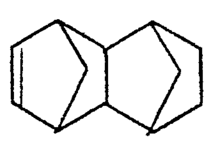

II

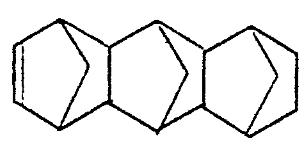

III

wherein said photoinitiators are selected from benzophenone, 4-chloro and 4-fluoro benzophenones,

9-fluorenone, 4-nitrobenzophenone, and mixtures thereof; wherein said polyfunctional monomers are selected from trimethylol propane triacrylate and trimethacrylate, pentaerythritol tetracrylate, divinylbenzene, triallyl cyanurate, diethylene glycol diacrylate and dimethacrylate, and mixtures thereof; wherein said organic peroxides are selected from t-butyl perbenzoate, t-butyl hydroperoxide, di-t-butyl peroxide, 2,5-dimethyl-2,5-di(t-butyl peroxy) hexane, 2,5-dimethyl-2,5-di(t-butyl peroxy) hexene-3, and mixtures thereof; and wherein said aliphatic azo compounds are selected from unsymmetrical azonitriles; amount of said crosslinking agent being 0.1 to 20 weight parts per 100 weight parts of said cycloolefin monomer.

36. Composition of claim 35 wherein said monomer is selected from norbornene, methyl norbornene, tetracyclododecene, methyl tetracyclododecene, dicyclopentadiene, hexacycloheptadiene, and mixtures thereof; amount of said crosslinking agent being 2 to 5 weight parts.

37. Composition of claim 34 wherein said polymer has a dielectric constant of less than 3 over a wide frequency range, is dimensionally stable when exposed to an atmosphere of a fluorinated hydrocarbon vapor at 250°C for 30 seconds, and is insoluble in 1,1,1-trichloroethane when a 2-mil thick sample thereof is immersed in 1,1,1-trichloroethane for two minutes.

38. Composition of claim 37 wherein said polymer is in a crosslinked condition and wherein said crosslinking agent is selected from photoinitiators, polyfunctional monomers, organic peroxides, and mixtures thereof.

European Patent Office

# EUROPEAN SEARCH REPORT

0226956

Application number

EP 86117229.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DD - A1 - 224 538 (VEB LEUNA-WERKE)<br>* Claims; examples * | 1,2,6,21,22,23,28,29,30 | C 09 D 3/49<br>B 05 D 7/26<br>C 08 G 61/08<br>C 08 J 5/18 |
| X | DE - A1 - 2 445 812 (SHOWA DENKO K.K.)<br>* Claims; page 24, lines 1-27 * | 1,2,6-8,10-12,17,28,29,31,32,34,35,38 | |
| X | US - A - 4 360 629 (WOOTTON et al.)<br>* Claims * | 1,6-10 | |

TECHNICAL FIELDS SEARCHED (Int Cl 4)

C 09 D
B 05 D
C 08 G 61/00
C 08 F 32/00
C 08 J

The present search report has been drawn up for all claims

| Place of search | Date of completion of the search | Examiner |
|---|---|---|
| VIENNA | 24-02-1987 | PAMMINGER |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82